# EUROPEAN PATENT APPLICATION

(11) **EP 4 191 754 A1**
(43) Date of publication of application: **07.06.2023**
(21) Application number: 22210967.0
(22) Date of filing: 01.12.2022
(51) Int. Cl.: H01M 50/105, H01M 50/148, H01M 50/178

(54) **SECONDARY BATTERY**

(30) Priority: 02.12.2021 KR 20210170951
(71) Applicant: Samsung SDI Co., Ltd., Yongin-si, Gyeonggi-do 17084 (KR)
(72) Inventor: RO, Dae Sung, 17084 Yongin-si (KR); KIM, Dong Hui, 17084 Yongin-si (KR); KIM, Jun Sik, 17084 Yongin-si (KR); KIM, Jin Hwan, 17084 Yongin-si (KR); PARK, Joon Hong, 17084 Yongin-si (KR); PARK, Joong Yong, 17084 Yongin-si (KR); LEE, Mi Sun, 17084 Yongin-si (KR); CHO, Byung Huy, 17084 Yongin-si (KR); CHOI, Kyu Gil, 17084 Yongin-si (KR)
(74) Representative: Marks & Clerk LLP

(57) **Abstract**

A secondary battery includes an electrode assembly, a case having a receiving portion with bottom and side surfaces accommodating the electrode assembly, and a terrace at an edge of the receiving portion, a cover covering the case, and first and second electrode tabs drawn out from the electrode assembly, wherein a first boundary is defined where the bottom surface and a side surface meet to form a first curved surface, a second boundary is defined where two adjacent side surfaces meet to form a second curved surface, a third boundary is defined where a side surface and the terrace portion meet to form a third curved surface, and a clearance is defined as a distance between a point where a curved surface leading from the side surface to the bottom surface starts and a point where a curved surface leading from the side surface to the terrace portion ends.

## Description

### BACKGROUND

### 1. Field

An embodiment of the present disclosure relates to a secondary battery.

### 2. Description of the Related Art

Unlike a primary battery that cannot be charged, a secondary battery can be charged and discharged. Low-capacity secondary batteries may be used in portable small-sized electronic devices, e.g., a smart phone, a feature phone, a tablet computer, a notebook computer, a digital camera, a camcorder, and the like, while high-capacity secondary batteries may be used as batteries for driving a motor, e.g., of a hybrid car, an electric vehicle, and the like, and as batteries for power storage.

The secondary battery may include an electrode assembly having a positive electrode and a negative electrode, a case accommodating the electrode assembly, and a terminal connected to the electrode assembly. The secondary battery can be classified into, e.g., a cylindrical type, a prismatic type, a pouch type, and so on according to its shape. For example, the pouch type secondary battery may be easily transformed in various shapes and can be formed of a laminate exterior case having a small weight.

### SUMMARY

A secondary battery according to an embodiment of the present disclosure includes an electrode assembly having a first electrode plate, a second electrode plate, and a separator in a stack or laminate type; a case body including a receiving portion for accommodating the electrode assembly and a terrace portion extending outward along the edge thereof; a case cover covering the case body and bonded along the terrace portion; and a first electrode tab drawn out from the first electrode plate and a second electrode tab drawn out from the second electrode plate, wherein the receiving portion has a bottom surface and a side surface thereof, an edge where the bottom surface and the side surface meet is formed into a curved surface, an edge where two adjacent side surfaces meet is formed into a curved surface, an edge where the side surface and the terrace portion meet is formed in a curved surface, and there is a clearance as a distance between a point where the curved surface leading from the side surface to the bottom surface starts and a point where the curved surface leading from the side surface to the terrace portion ends.

In addition, the clearance may be 0.1-0.6 mm.

In addition, a radius of curvature at the edge where the bottom surface and the side surface meet may be smaller than a radius of curvature at the edge where two adjacent side surfaces meet.

In addition, the bottom surface may have two long sides opposite to each other and two short sides opposite to each other, and the sum of the radius of curvature at the edge where the long side and the side surface meet and the radius of curvature at the edge where the short side and the side surface meet may be smaller than the radius of curvature at the edge where two adjacent side surfaces meet.

In addition, the radius of curvature at the edge where the bottom surface and the side surface meet may be 0.2-0.5 mm.

In addition, the radius of curvature at the edge where two adjacent side surfaces meet may be 1.0-4.0 mm.

At least some of the above and other features of the invention are set out in the claims.

### BRIEF DESCRIPTION OF DRAWINGS

Features will become apparent to those of skill in the art by describing in detail embodiments with reference to the attached drawings, in which:
FIG. 1 is an exploded perspective view illustrating a secondary battery according to an embodiment of the present disclosure, viewed from above.
FIG. 2 is a partial perspective view illustrating a combined secondary battery according to an embodiment of the present disclosure, viewed from below.
FIG. 3 is a partial perspective view illustrating a combined secondary battery according to an embodiment of the present disclosure, viewed from below at a different angle from FIG. 2.
FIG. 4 is a schematic representation of a clearance in a case body of a secondary battery according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both orientations of "above" and "below".

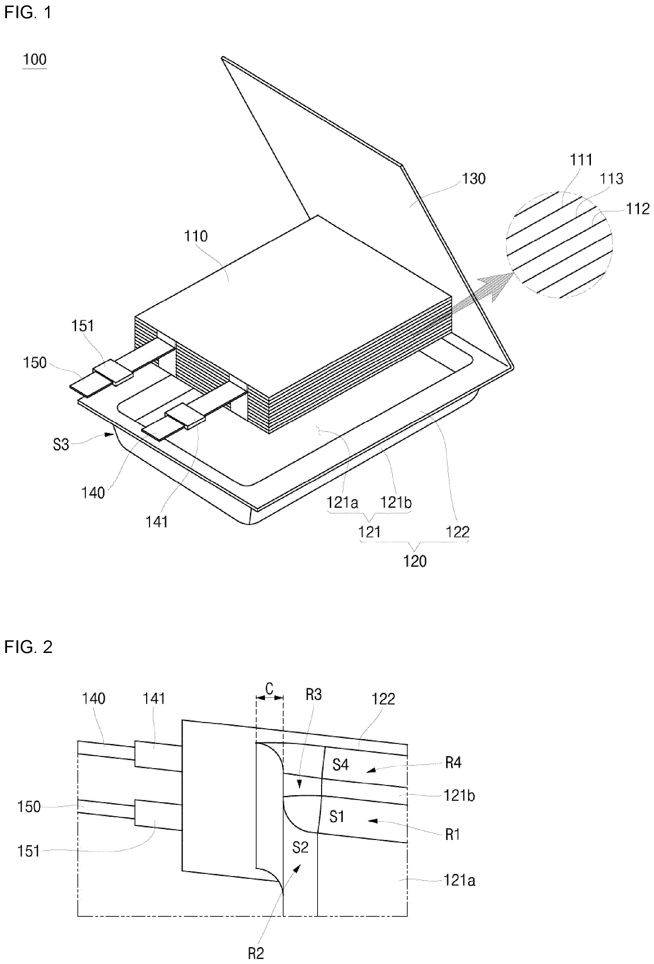

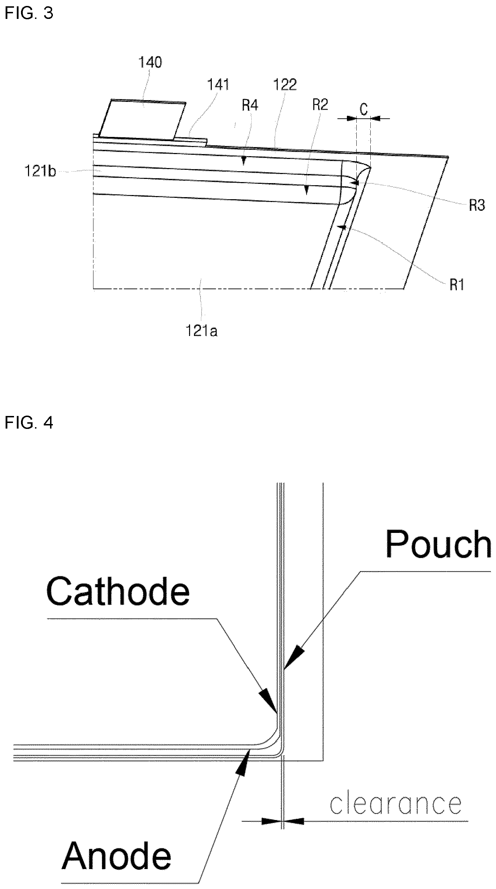

FIG. 1 is an exploded perspective view illustrating a secondary battery 100 according to an embodiment of the present disclosure, viewed from above. FIG. 2 is a partial perspective view illustrating an assembled secondary battery 100 according to an embodiment of the present disclosure, viewed from below. FIG. 3 is a partial perspective view illustrating the assembled secondary battery 100 according to an embodiment of the present disclosure, viewed from below at a different angle from FIG. 2. FIG. 4 is a schematic representation of a clearance in a case body of a secondary battery according to an embodiment of the present disclosure

Referring to FIG. 1, the secondary battery 100 includes an electrode assembly 110, a case body 120, a case cover 130, a first electrode tab 140, and a second electrode tab 150. For example, the secondary battery 100 may be a pouch type secondary battery or a polymer type secondary battery.

The electrode assembly 110 includes a first electrode plate 111, a second electrode plate 112, and a separator 113 between the first and second electrode plates 111 and 112. The first and second electrode plates 111 and 112 have opposite polarities.

The first electrode plate 111 may be any one of a negative electrode plate and a positive electrode plate. When the first electrode plate 111 is a negative electrode plate, the first electrode plate 111 may include a negative electrode coated portion, where a negative electrode active material is coated on a negative electrode current collector plate made of a conductive metal thin plate (e.g., a copper or nickel foil or mesh), and a negative electrode uncoated portion, where a negative electrode active material is not coated. For example, the negative electrode active material may include a carbon-based material, Si, Sn, tin oxide, a tin alloy composite, a transition metal oxide, lithium metal nitrite, or a metal oxide.

The second electrode plate 112 may be any one of a negative electrode plate and a positive electrode plate. When the first electrode plate 111 is a negative electrode plate, as described above, the second electrode plate 112 may be a positive electrode plate. In this case, the second electrode plate may include a positive electrode coated portion, where a positive electrode active material is coated on a positive electrode current collector plate made of a highly conductive metal thin plate (e.g., an aluminium foil or mesh), and a positive electrode uncoated portion, where a positive electrode active material is not coated. For example, the positive electrode active material may include a chalcogenide compound, e.g., a composite metal oxide, such as LiCoO₂, LiMn₂O₄, LiNiO₂, or LiNiMnO₂.

The separator 113 is interposed between the first electrode plate 111 and the second electrode plate 112, and serves to prevent an electrical short between the first electrode plate 111 and the second electrode plate 112. The separator 113 may be made of, e.g., polyethylene, polypropylene, a porous copolymer of polyethylene and polypropylene, and the like. The separator 113 may have a larger area than each of the first electrode plate 111 and the second electrode plate 112 in order to effectively prevent an electric short between the first electrode plate 111 and the second electrode plate 112.

In the electrode assembly 110, a plurality of first electrode plates 111, second electrode plates 112, and separators 113 may be sequentially stacked to form a stack type or lamination type secondary batteries.

The case body 120 includes a receiving portion 121 for accommodating the electrode assembly 110 and a terrace portion 122 extending outwardly along an edge of the receiving portion 121. For example, the terrace portion 122 may extend in a substantially horizontal direction (on the basis of FIG. 1) from the top of the receiving portion 121 along an entire perimeter of the receiving portion 121.

The case body 120 may be manufactured by using a punch. For example, the case body 120 may be manufactured by fixing a flat sheet member at an edge portion, e.g., fixing the edge portion along an entire perimeter of the flat sheet member, and pressing a central portion of the flat sheet member by means of the punch, e.g., to define a dent or hollow therein relative to the fixed edge portion. Accordingly, the central portion of the sheet member, which is pressed by means of the punch, becomes the receiving portion 121 (i.e., the resultant dent or hollow), and the fixed edge portion becomes the terrace portion 122. For example, the flat sheet member may be formed in a substantially quadrangular shape, and the punch may be formed in a substantially quadrangular parallelepiped shape. Therefore, the receiving portion 121 may also have a space formed in a substantially quadrangular, e.g., rectangular, parallelepiped shape, and the terrace portion 122 may also have a substantially quadrangular, e.g., rectangular, periphery.

The receiving portion 121 has a bottom surface 121a and a side surface 121b. For example, referring to FIG. 1, side surfaces 121b may extend integrally from the bottom surface 121a, and may surround an entire perimeter of the bottom surface 121a. For example, referring to FIG. 1, the side surfaces 121b may include two long side surfaces and two short side surfaces arranged alternately into a quadrangular shape around the bottom surface 121a

In addition, in order to prevent the case body 120 from being easily damaged due to stress concentration on a boundary portion of the receiving portion 121 during manufacture, distribution, storage and use, each boundary portion is formed into a curved surface. For example, a first boundary portion where a long side of the bottom surface 121a and the side surface 121b adjacent thereto meet, e.g., contact each other, is curved, e.g., formed into a first curved surface S1 that curves away from an interior of the receiving portion 121 to be concave with respect to the receiving portion 121, so as to have a first radius of curvature R1. In addition, a second boundary where the short side of the bottom surface 121a and the side surface 121b adjacent thereto meet, e.g., contact each other, is curved, e.g., formed into a second curved surface S2 that curves away from an interior of the receiving portion 121 to be concave with respect to the receiving portion 121, so as to have a second radius of curvature R2. In addition, an edge where two adjacent side surfaces 121b meet is curved, e.g., formed into a third curved surface S3 that curves away from an interior of the receiving portion 121 to be concave with respect to the receiving portion 121, so as to have a third radius of curvature R3.

However, when the electrode assembly 110 is configured in a stack or lamination type, as described above, it may be formed to have a substantially angled rectangular parallelepiped shape. Thus, if the first radius of curvature R1 and the second radius of curvature R2 are too large, the space utilization rate of the receiving portion 121 may be reduced accordingly, and thus, the battery capacity may decrease. Further, if the first radius of curvature R1 and the second radius of curvature R2 are too small, the stress concentration relaxation effect may be reduced. Accordingly, in order to compensate for the first and second radii of curvature R1 and R2, the third radius of curvature R3 may be formed to be relatively large.

For example, the first radius of curvature R1 and the second radius of curvature R2 may be smaller than the third radius of curvature R3. In particular, the sum of the first radius of curvature R1 and the second radius of curvature R2 may be smaller than the third radius of curvature R3. For example, each of the first radius of curvature R1 and the second radius of curvature R2 may be in a range of about 0.2 mm to about 2.0 mm (e.g. about 0.2 mm to about 0.5 mm), and the third radius of curvature R3 may be in a range of about 1.0 mm to about 4.0 mm.

The radius of curvature may be implemented by imparting a specific curvature to the punch. That is, the punch is formed in a rectangular parallelepiped shape, wherein the boundary (e.g., edge) where the bottom surface 121a and the side surface 121b meet is formed into a curved surface so that the boundary has a curvature corresponding to the first radius of curvature R1 and the second radius of curvature R2, respectively, and the boundary (e.g., edge) where two adjacent side surfaces 121b meet (corresponding to a height) is formed into a curved surface so as to have a curvature corresponding to the third radius of curvature R3.

Furthermore, a fourth boundary where the side surface 121b and the terrace portion 122 meet is curved, e.g., formed into a fourth curved surface S4 that curves toward an interior of the receiving portion 121 to be convex with respect to the receiving portion 121, so as to have a fourth radius of curvature R4. For example, the fourth boundary may be the edge between the terrace portion 122 and the receiving portion 121.

As a result, a distance C, i.e., a clearance C, exists between a point where the curved surface leading from the side surface 121b to the bottom surface 121a starts and a point where the curved surface leading from the side surface 121b to the terrace portion 122 ends (e.g., in a substantially vertical direction in FIG. 1). For example, the clearance C may be a distance on the side surface 121b between the fourth curved surface S4 and each of the first and second curved surfaces S1 and S2 (i.e., on each of respective short and long sides of the case body 120).

The clearance C may be about 0.1 mm to about 0.6 mm. When the clearance C is secured to be greater than or equal to 0.1 mm, the first and second radii of curvature R1 and R2 may be sufficiently large to effectively prevent the case body 120 from being easily damaged due to stress concentration at the corresponding boundary (e.g., edge). In addition, when the clearance C is about 0.6 mm or less, the first and second radii of curvature R1 and R2 may be sufficiently small to prevent the battery capacity from being unnecessarily reduced.

The case cover 130 may be a flat sheet member, which covers the case body 120 and is bonded along the terrace portion 122. The case body 120 and the case cover 130 may be integrally formed with each other, so that the case cover 130 may be foldably connected to the case body 120, or may be formed separately from each other.

The first electrode tab 140 may be electrically connected to the first electrode plate 111 of the electrode assembly 110, and may be drawn out through a space between the case body 120 and the case cover 130. In addition, the first electrode tab 140 may include a first insulation tape 141 between the case body 120 and the case cover 130 while surrounding the first electrode tab 140, and being seated on the terrace portion 122. The first insulation tape 141 serves to insulate the first electrode tab 140 from metal layers of the case body 120 and the case cover 130.

The second electrode tab 150 may be electrically connected to the electrode uncoated portion of the second electrode plate 112 of the electrode assembly 110, and may be drawn out through a space between the case body 120 and the case cover 130. In addition, the second electrode tab 150 may include a second insulation tape 151 between the case body 120 and the case cover 130 while surrounding the second electrode tab 150, and being seated on the terrace portion 122. The second insulation tape 151 serves to insulate the second electrode tab 150 from the metal layers of the case body 120 and the case cover 130.

By way of summation and review, an embodiment of the present disclosure provides a secondary battery capable of sufficiently securing battery capacity while preventing case damage as much as possible. That is, as described above, an embodiment of the present disclosure provides a secondary battery wherein a case body is manufactured by using a punch, such that edges where the bottom surface and the side surface of a receiving portion, a terrace portion, etc. meet are formed into curved surfaces so as to have radii of curvature, and a specific distance (clearance) is made to exist as a distance between a point where the curved surface leading from the side surface to the bottom surface starts and a point where the curved surface leading to the terrace portion ends, thereby sufficiently securing battery capacity while preventing case damage due to stress concentration as much as possible.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly including a first electrode plate, a second electrode plate, and a separator in a stack;
a case body including a receiving portion and a terrace portion, the receiving portion including a bottom surface and side surfaces extending from the bottom surface to accommodate the electrode assembly, and the terrace portion extending outwardly along an edge of the receiving portion;
a case cover covering the case body and bonded along the terrace portion; and
a first electrode tab drawn out from the first electrode plate and a second electrode tab drawn out from the second electrode plate,
wherein a first boundary is defined where the bottom surface and at least one of the side surfaces meet, the first boundary being a first curved surface,
wherein a second boundary is defined where two adjacent ones of the side surfaces meet, the second boundary being a second curved surface,
wherein a third boundary is defined where at least one of the side surfaces and the terrace portion meet, the third boundary being a third curved surface, and
wherein a clearance is defined as a distance between a point where a curved surface leading from one of the side surfaces to the bottom surface starts and a point where a curved surface leading from the one of the side surfaces to the terrace portion ends.

2. The secondary battery as claimed in claim 1, wherein the clearance is in a range of 0.1 mm to 0.6 mm.

3. The secondary battery as claimed in claim 1 or claim 2, wherein a radius of curvature of the first curved surface is smaller than a radius of curvature of the second curved surface.

4. The secondary battery as claimed in any one of claims 1 to 3, wherein:
the bottom surface of the receiving portion includes two long sides opposite to each other and two short sides opposite to each other, and
a sum of a radius of curvature where one of the two long sides and one of the side surfaces meet and a radius of curvature where one of the two short sides and one of the side surfaces meet is smaller than a radius of curvature of the second curved surface.

5. The secondary battery as claimed in any one of claims 1 to 4, wherein a radius of curvature of the first curved surface is in a range of 0.2 mm to 0.5 mm.

6. The secondary battery as claimed in any one of claims 1 to 5, wherein a radius of curvature of the second curved surface is in a range of 1.0 mm to 4.0 mm.
